Europäisches Patentamt

European Patent Office

Office européen des brevets

(19)

(11) **EP 1 217 796 A2**

(12) **EUROPEAN PATENT APPLICATION**

(43) Date of publication:
26.06.2002 Bulletin 2002/26

(51) Int Cl.7: **H04L 12/56**

(21) Application number: 01403300.5

(22) Date of filing: 19.12.2001

(84) Designated Contracting States:
**AT BE CH CY DE DK ES FI FR GB GR IE IT LI LU MC NL PT SE TR**
Designated Extension States:
**AL LT LV MK RO SI**

(30) Priority: 20.12.2000 US 741381

(71) Applicant: **ALCATEL**
**75008 Paris (FR)**

(72) Inventor: **Mayes, Mark**
**Dallas, TX 75252 (US)**

(74) Representative: **Cabinet Hirsch**
**34, Rue de Bassano**
**75008 Paris (FR)**

(54) **Recursion based switch fabric**

(57) As regards internal router interconnectivity, the invention optimizes use of the network's distributed resources by maximizing diffusivity of traffic across the switch fabric. It may be applied to a distributed router - or switching fabric(10) - comprised of a plurality of nodes (12). The data is routed through the switching fabric (10) via a logical channel (30) therein. The enabled connection (30) is comprised of a portion of the network's physically interconnected switching nodes (12) which have been configured into a connection state topology by the central controller (24). A recursive method used for mapping or interconnecting through the fabric (10) is based on an array element's address coordinates.

A collection of nodes (12) may be conceptually arranged into a multi-dimensional array (10). The network nodes (12) are indexed and the mapping is done using modulo arithmetic on the node indices. Two criteria, capacity and nonblocking assignment (free of contention) may also be evaluated before a path or logical connection (30) is assigned.

SWITCHING NETWORK WITH ROWS AND COLUMNS
FIG. 1

EP 1 217 796 A2

**Description**

FIELD OF INVENTION

This invention is related to internal router interconnectivity. In particular, it is related to distributing incoming traffic across the switch fabric of a distributed router in a systematic manner that allows load balancing and diffusivity, while eliminating internal blocking.

BACKGROUND OF INVENTION

U.S. patent 5,841,775 (the "Huang" patent) discloses a router-to router interconnection involving switching of nodes having TCP/IP functionality. However, the Huang concept does not extend gracefully to a switch fabric without TCP/IP functionality. With a clever interconnection of switching nodes, a switch fabric can reduce the number of switching nodes it contains while maintaining the same effective capacity. For example, the "Huang" patent discloses an interconnection of a n×(n-1) array of switching nodes that achieves the same effective capacity of a n×n (n by n) crossbar switch fabric.

However, there are two problems with Huang that limit its generality. First, it does not address switch fabric interconnection in complete generality because it details connections at the physical layer. As a result, it has limited reconfigurablity and limited scalability.

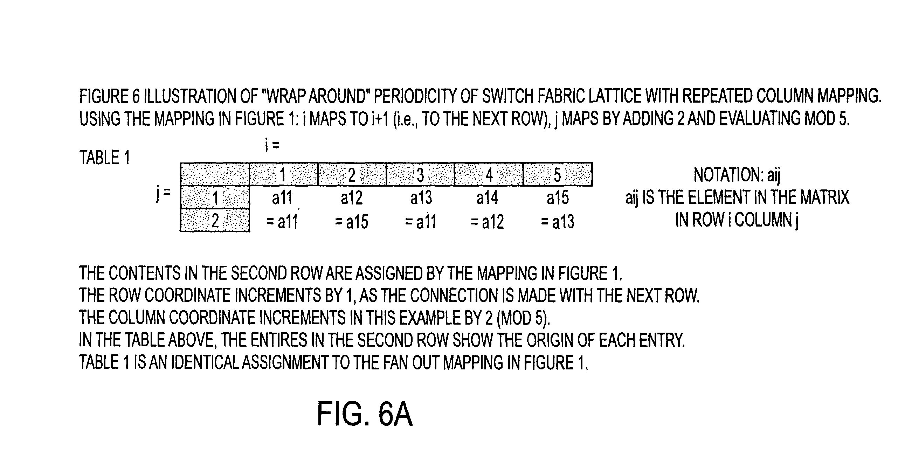

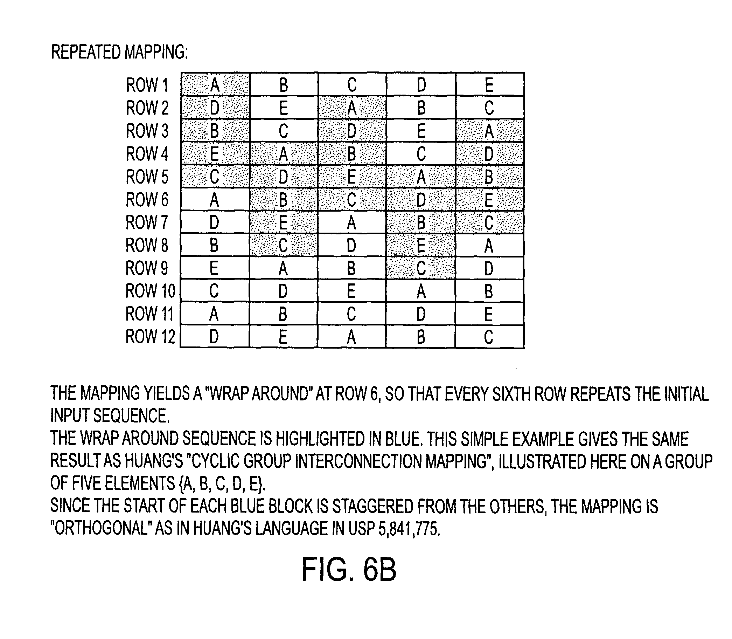

Secondly, Huang fails to address the fact that this enhanced interconnectivity is achieved in great part by broadcasting multiple copies of inputs. Figure 6 in Huang demonstrates the connectivity of Huang's cyclic permutation. This figure illustrates a mapping of inputs to outputs through three mapping stages. In the figure, three copies of the contents of switching node a in the top row are broadcasted to the next layer. Similarly, throughout the fabric the contents of each switching node are broadcasted to three nodes in the next row. This leads to the 'enhanced interconnectivity' disclosed in the Huang claims, which is defined as every input being available to each output.

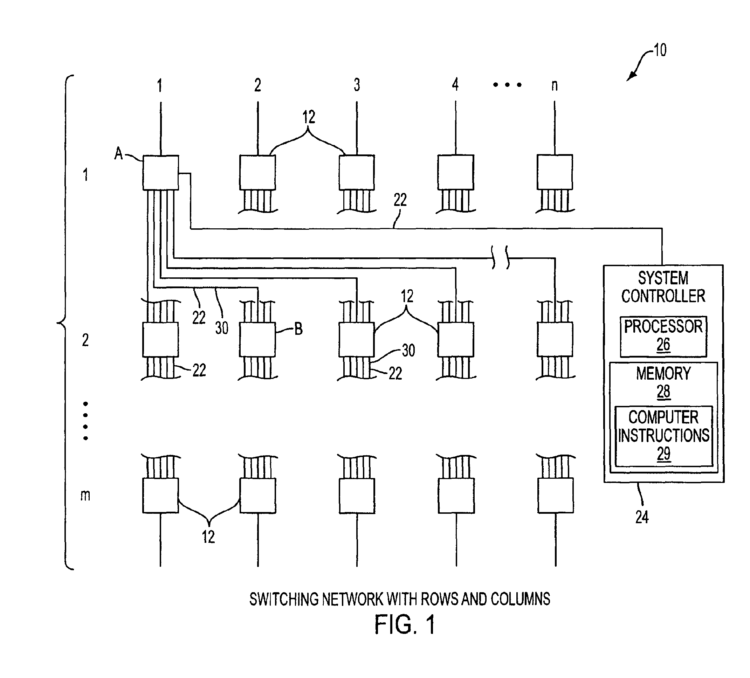

Clearly, replicating and broadcasting multiple copies of the inputs enhances connectivity of nodes across the fabric. However, this presents another lack of generality— the enhanced interconnectivity demonstrated in the last row of figure 1 in Huang is not so much dependent upon the proprietary interconnection scheme presented in the claims as it is on replicating and broadcasting multiple copies of the inputs. This error in logic of attributing the degree of interconnectivity to the interconnect scheme limits the generality and weakens the viability of the Huang interconnection mapping.

Riccardo Melen and Johnathon S. Turner disclose using recursion to solve the routing problem in "Nonblocking Networks for Fast Packet Switching," in *Performance Evaluation of High Speed Switching Fabrics and Networks: ATM, broadband ISDN, and MAN Technology,* edited by Thomas Robertazzi, A selected reprint volume, Communications Society, sponsor, (IEEE Press ISBN 0-7803-0436-5), 1993, p.79.

The Mayes/Cantrell patent application, Recursion Based Switch Fabric for Aggregate Tipor, Patent Application No. 09/576,625 filed on May 23, 2000 also discloses using recursion. However, it is distinct from Melen. The networks discussed in Melen have a recursive physical structure— layers of subnetworks within the network. Hence, the routing problem is recursive by construction. However, the recursive solution presented in Mayes/Cantrell makes no presumption on network structure other than a high degree of physical interconnectivity.

Another distinction with the Mayes/Cantrell application is that it does not present a solution to the routing problem through a network (or switch fabric). Rather, it presents a solution for computing an interconnection state at the datalink layer (i.e., an interconnection state topology) for switching nodes within a switch fabric. This interconnection state provides the central scheduler a set of options for setting a route through the fabric.

SUMMARY OF THE INVENTION

The present invention is a method and apparatus for interconnecting a plurality of nodes in a network having an ingress and an egress. First, the plurality of nodes is physically or operably interconnected. Next, a logical channel between said ingress and said egress is created by enabling at least one of said physical (or operable) interconnections between adjacent rows of nodes. The present invention is a method for configuring logical channels into a network fabric, or connection state topology.

The logical channel is created between the ingress and the egress by assigning a coordinate (or coordinates) to each of the nodes in the network and mapping at least one of the operable interconnections between adjacent rows of nodes, whereby a logical connection is created between adjacent rows of nodes. The path (route) is a succession of said operable interconnects, and the interconnection solution is carried forward from row to row (or node to node) in a recursive manner, using node coordinates.

In another preferred embodiment, multiple logical paths are enabled through said switching network by assigning more than one of logical interconnection between adjacent rows.

In still another preferred embodiment, the interconnections between nodes are mapped recursively by performing a recursive calculation by computing the coordinates of a second node by performing modulo arithmetic to the coordinates of a first node.

In yet another preferred embodiment, the step of creating a logical connection further comprises checking capacity on at least one of the operable interconnections between nodes. Then the operable interconnection is checked for compatibility with previous assignments to avoid data collision on interconnect. The logical connection (or connection state) is established if flow does not exceed said capacity and the interconnection is compatible with the set of channel assignments.

In yet another preferred embodiment, the network comprises a central controller having a processor and memory and an array of switching nodes operably connected to the central controller. Furthermore, the memory comprises programming instructions to create logical interconnections between the array of switching nodes. In addition, the programming instructions further comprise instructions to assign a coordinate to each of said nodes in said network and create the logical interconnections recursively by application of the present invention.

BRIEF DESCRIPTION OF THE DRAWINGS

Figure 1 illustrates a switching network comprising N rows and M columns of switching nodes and a system controller operably connected to the nodes.

Figure 2 illustrates the a network represented as a two-dimensional array using two indices (i, j) as an addressing scheme.

Figure 3 illustrates a mapping using a recursive rule in which connection assignments are made by modulo calculation.

Figure 4 is a flowchart illustrating the steps taken when mapping the contents of node using modulo arithmetic modulo the number of rows.

Figure 5 illustrates mapping by recursive rule using repeated fan-out pattern - a visual representation of application of a recursive channel assignment rule.

Figure 6 illustrates the wrap around periodicity of the switching array.

Figure 7 is a flowchart illustrating the steps taken when mapping the contents of node $a_{i,j}$ using modulo arithmetic modulo the number of rows and modulo the number of columns.

Figure 8 is a flowchart illustrating the steps taken when mapping the contents of node using Capacity and Nonblocking constraint criteria.

DETAILED DESCRIPTION OF THE INVENTION

Typically, communication of data from a source to a destination beyond a local area is achieved by sending the data through a network of intermediate switching nodes. The collection of switching nodes comprises a switching fabric. The source and destination can be any type of a communicating device such as a computer, a terminal or a telephone. These switching nodes (or switching routers or router modules) are interconnected. Without loss of generality, the source and destination are considered as the ingress node and the egress node of the switch fabric.

Data traffic over switching networks has been growing at an exponential rate in recent years. As a result, switching routers currently in use to route data traffic may soon reach their limits. In order to make optimum use of a switching network's distributed resources, the interconnection of the router modules in the network must be configured to maximize the diffusivity of data traffic across the switch fabric. Diffusivity describes the ability to spread inputs across the switch fabric. The diffusion of traffic across the switch fabric should make efficient use of the distributed resources of the fabric so that the traffic load may be balanced. This helps to prevent local congestion. More particularly, incoming data traffic must be distributed in a systematic manner that allows for load balancing and diffusivity, while reducing or eliminating internal blocking.

The present invention is directed to internal router interconnectivity. It optimizes use of the network's distributed resources by maximizing diffusivity of traffic across the switch fabric. In a preferred embodiment, it is applied to a distributed router (or switch fabric) comprised of a network of nodes. The nodes used in the switching fabric can be router modules, switching modules or any nodes within a network. The network may be a switching fabric or a general network as long as it comprises a distributed network of switching nodes (or some other function of nodes).

Furthermore, the router modules function in a semi-autonomous manner with respect to each other. The semi-autonomous router modules are networked into an aggregate (distributed) router with higher capacity. (The semi-autonomous router modules are the switching elements within the switch fabric). In addition, each of the semi-autonomous router modules has a high degree of interconnectivity to other nodes in the network so that the adjacent modules are a number of nodes in the network. Each module has basic router functionality.

Each switching node is physically (or operably) connected to a plurality of other switching nodes. The interconnections are assigned on logical channels by a central controller which implements the recursive interconnection algorithm. (A logical channel represents a sequence of connections). The controller supervises the individual nodes in the fabric, directs the traffic flow, and maintains routing tables. The routing assignments through the switching network are based upon the interconnection assignments in the fabric. When data is routed through the switching fabric, the data is routed through a logical channel in the switching fabric. The logical channel is comprised of a portion of the network's switching nodes which have been logically configured by the central controller into a logical topology (datalink layer topology) that is the basis for the network routing table. That is, the controller identifies or enables a portion of the physical connections which are actually used to route data through the switching fabric.

For example, although an input or ingress node of the switching fabric may be physically connected (22) to a plurality of other nodes, the central controller (24) (or system controller) may enable just one of these connections (22), thereby forming a logical connection (datalink layer) (30) between the input node (12) and a second node (12). (For example, in Fig. 1, although input node A in row 1 is physically connected to the M nodes in row 2, the central controller (24) may only enable the connection to node B in row 2). Similarly, the output of the node B may be have physical connection to a plurality of the M nodes located in row 3. Once again, the central controller (24) may enable just one of these physical connections, i.e., create a logical connection (30) (or a link or an arc). This enabling process can be continued until a logical channel is established through the switching fabric from ingress to egress. Therefore, only a portion of the physical interconnections (22) serve as logical connections (30).

It is clear from the above discussion, that more than one route can be enabled through the switching network. The availability of multiple paths provides for increased load balancing, packet jitter reduction and fault tolerance.

Because the interconnections (22) between routers are assigned on logical channels, the central controller can perform dynamic allocation and, thereby, allocate the switch fabric's resources as traffic conditions dictate. In addition, it can allocate the fabric's resources as each module's status dictates. For example, it can allow the central controller (24) to reconfigure the network to direct traffic flow away from a defective module (12) or to include a new module (12). Therefore, the switch fabric (10) is more easily scaled and serviced. In addition, the logical channel interconnections allow dynamic reconfiguration of the internal number of wavelengths, the number of fiber input/outputs (I/O) and the number of internal buffers.

It should be pointed out that there does not have to be an equal number of switching nodes (12) in each row, or an equal number of physical connections (22) between switching modules (12). Similarly, there doesnot have to be an equal number of switching nodes (12) in each column. In addition, the number of switching nodes (12) in each column and row can be varied by the addition and subtraction of switching nodes (12) to and from the network.

While the apparatus and method of the present invention applies to networks (10) (or switch fabrics or switching arrays), in a preferred embodiment, it also applies to Terabit IP Optical Routers (TIPOR). TIPOR refers to a network of small capacity (Gbit/sec) router modules that combine to an aggregate terabit capacity. The switching nodes (12) can comprise switches, gates and routers. The central controller (24) can take any form of processing apparatus (26), e.g., a signal processor, a microprocessor, a logic array, a switching array, an application specific integrated circuit (ASIC) or another type of integrated circuit. The central controller (24) may also comprises memories (28) containing computer programming instructions (29). Such memories may include RAM, ROM, EROM and EEPROM.

The objective is to formulate an interconnection strategy that minimizes the number of router modules while maintaining an acceptable blocking probability. In a preferred embodiment, the switching fabric (10) is wide sense blocking. Wide sense nonblocking refers to a network in which there exists a route through the network (10) that does not contend with existing routes. That is, for an arbitrary sequence of connection and disconnection requests, blocking can be avoided if routes are selected using the appropriate topology configuration algorithm. Furthermore, disconnection requests are performed by deleting routes.

Classical networking proofs demonstrate that for n inputs to n outputs, the fewest number of switching nodes in a wide sense nonblocking switch fabric is $n^2$, as in an $n \times n$ crossbar. In the Huang patent, a wide sense nonblocking fabric is demonstrated with $n \times (n-1)$ switching nodes. However, this would not be possible without the replicating and broadcasting copies of the inputs as is done throughout the Huang patent (e.g. figures 1, 2, and 6).

In the following discussion, an abstract network of switching nodes is interconnected to form a switch fabric (10). The network can be envisioned as a rectangular array (see Fig. 1) comprised of m rows and n columns. The actual physical network may not resemble a rectangular array, but the nodes (12) within the fabric can be assigned coordinates (i,j) so that the network (10) is in effect topologically flat, where i represents the row and j represents the column. The addresses are assigned so that the first row of the array receives the inputs. Each row represents a stage in the switching fabric (10). The first row represents the first stage, the second row represents the second stage, etc. The number of elements across the row (i.e. number of columns) indicates the number of channels. In addition, a central controller (24) is connected to each switching node (12).

The problem is then how the first row maps the inputs to the second row, then the second row to the third and so on through the fabric. In Huang a *'blocking compensated cyclic group interconnection'* provides the mapping. This is hard-wired at the physical layer, hence is limited since it requires physical rewiring to add or remove nodes. In the figures in the patent, it is apparent that the wiring fan-out is repeated from stage to stage. This is the "cyclic permutation" on a group of n elements, where 'n' is the number of inputs (i.e. the number of channels). It is cyclic because the mapping from stage to stage restores the original input order after a number of mappings. However, the interconnectivity in the Huang claims can be achieved by other means than by repeating the wiring fan-out from stage to stage.

For example, in the present invention it is possible that not all of the physical (or operable) connections are used because the utilized connections are the connection assignments made at the datalink layer, not the physical layer. Practically speaking, the central controller (24) will enable the connection state of the switch fabric that will provide the most efficient path between the input and the output of the switching fabric (10). Furthermore, the high degree of interconnectivity allows a multitude of network connection state (i.e., connection topology) options.

The use of more than one path between rows in which to route data produces a redundant and fault tolerant interconnection. Redundance and fault tolerance refers to the use of multiple connection states or options within the network to reach the same output. Therefore, if a router or switch (12) in one path between the source and destination were to fail, then the data can be routed over an alternate path not comprising the failed router (12).

Furthermore, the switch fabric (10) is easily reconfigured by changing assignments within the connection state topology (datalink layer), not by physically rewiring the interconnection between nodes (12). This allows dynamic reconfiguration of the switch fabric (10) to both scale and to accommodate changes in traffic patterns. Therefore, the network (10) is scalable. Scalability refers to the situation in which the network (10) should the able to accommodate growth and/or the removal and addition of switching nodes (12). More routers can be added to the switch fabric (10) to increase the number of inputs and outputs.

In a first embodiment, a recursion methodology is used by the central controller (24) to set the interconnections between router modules (12) in the network (10). (A recursive method is a method which carries forward the previous solution while determining the next interconnection. The solution of interconnections when agrregated forms a path through the network. For example, j' = j + 1 is recursive in nature because the new value j' is built upon the older value of j). That is, the recursion methodology interconnects the modules (12) using the module's addresses within the switch fabric (10). The recursion methodology provides for interconnectivity, load balancing and optimal diffusivity of inputs across the switch fabric (or network) (10).

Load balancing refers to the ability to balance traffic load across the distributed resources of a switch fabric (10). Traffic is divided or distributed over different paths in the switch fabric (10) to prevent any one path from becoming too congested. The recursion methodology also allows for partitioning of the switch fabric (10) to segregate subnetworks into disjoint nodes.

Two recursive strategies for interconnection of switching nodes within a switch fabric are utilized by the present invention. The first embodiment comprises a method of mapping that is recursive using modulo arithmetic. The second is a method of interconnecting nodes involving mapping by recursive assignment taking into account capacity constraints and nonblocking assignments.

RECURSIVE MAPPING

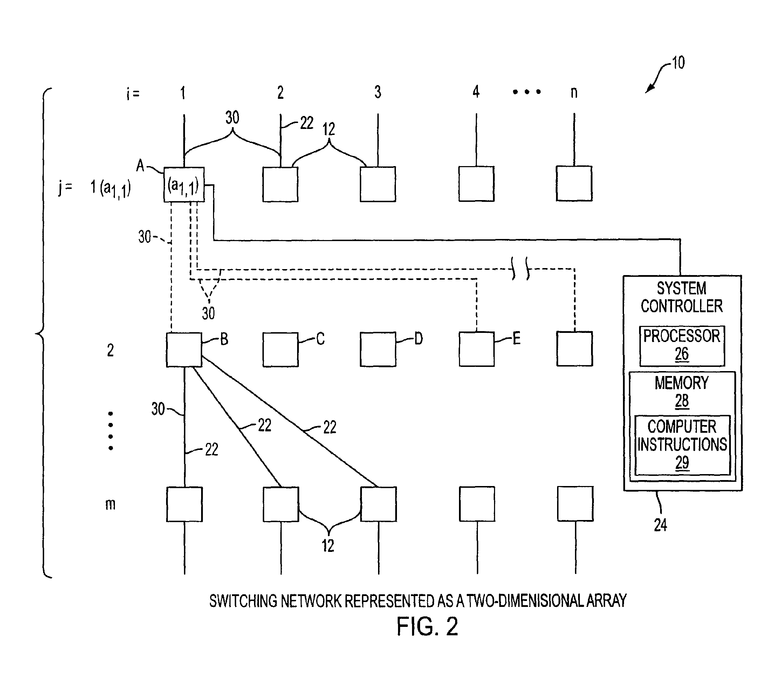

To demonstrate a mapping that is recursive because of the systematic coordinate assignment of the fabric nodes, start by taking an abstract collection of switching nodes (12). For the purpose of illustration, the network (10) may be represented as a two-dimensional array using two indices as an addressing scheme. See Figure 2. Each node (12) is assigned an array coordinate, (i,j), where i represents the row and j represents the column and where $1 \leq i \leq m$ and $1 \leq j \leq n$. Coordinate, (i,j) represents the node's address. Let the number of nodes (12) in this network (10) be given by z.

The column dimension is the total number of separate channels. Let the number of columns be equal to integer n. This may also be determined by the product of the number of nodes and the number of channels per node. Let the number of rows be equal to integer m. Row dimension m can be determined by dividing the number of nodes z by the number of channels or columns n. This then represents the collection of nodes as an $m \times n$ array.

A recursive method used for mapping or interconnection through the fabric is based on an array element's address coordinates. First consider mapping one row to the next row. The contents held in node $a_{i,j}$ are to be mapped to an element $a_{i+1,k}$ in the next row, i+1. i+1 is the row index and 'k' is the column index for the element that $a_{i,j}$ maps to.

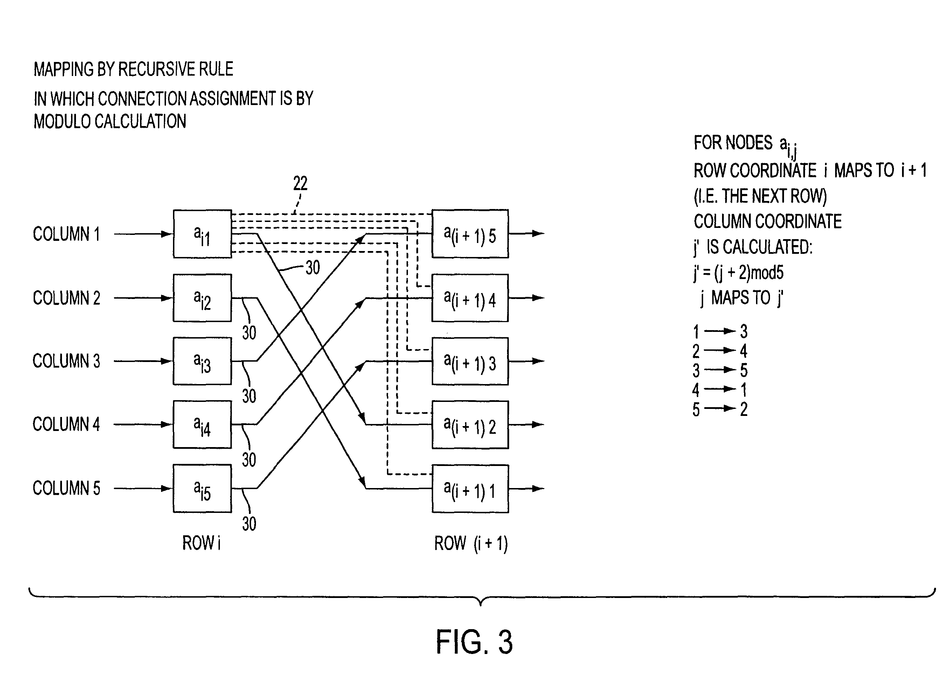

Furthermore, assume a high degree of physical connectivity, that is, each switching node has a physical connection to multiple switching nodes in the next row. For example, in Fig. 2 node A in row 1 is physically connected to nodes B thru E in row 2. Similarly, in Figure 3, let node $a_{i1}$ in row i be physically connected (e.g., hard-wired) to every node in row i + 1, i.e., ($a_{(i+1)1}$ thru $a_{(i+1)5}$). Similarly, let nodes $a_{i2}$ thru $a_{i5}$ in row i be physically connected (e.g., hard-wired) to every node in row i + 1.

Uniformly Disbursing Traffic

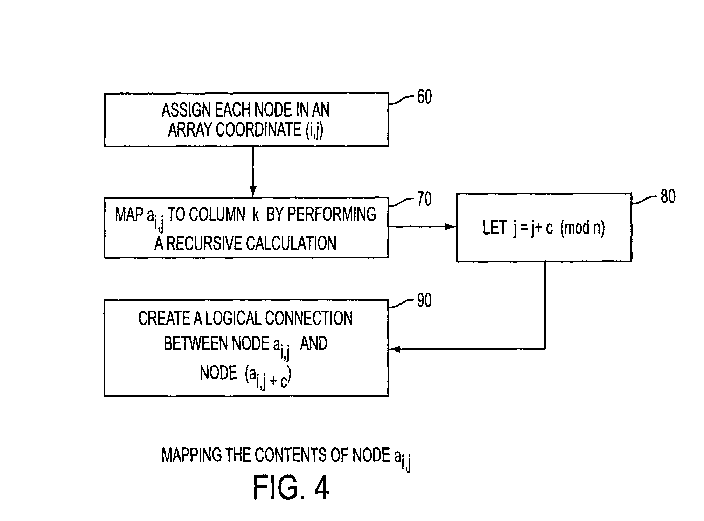

Traffic can be uniformly disbursed across the switch fabric by selecting the column k in which the contents held in node $a_{i,j}$ are to be mapped to using the column coordinate j from $a_{i,j}$. See Figs. 3 and 4. First, each node (12) is assigned an array coordinate, (i,j) (60). Next, let k = j + c (mod n), where c is a constant between 1 and n, where n is the number of inputs (i.e. channels) for the m×n array. To determine where the contents (or information) of node $a_{i,j}$ are mapped (70) to in the next row, take the column coordinate j and add the constant c (80). This result needs to be between 1 and n to correspond to an array element. Hence it is evaluated modulo n, the maximum number of the index used in the calculation. See Figure 4.

In this example, the constant c is a single value for all the array elements in the row. (In Figure 3, c = 2). Next, create a logical connection between node $a_{i,j}$ and node ($a_{i+1,j+c}$) (90). This spreads connection assignments across the next row in a uniform manner. This is an example of *orthogonal mixing.* The fabric (10) does not get congested by overloading certain nodes (12). Rather, this method uniformly disburses traffic. In a preferred embodiment, the logical connection is created by the processor (26) in the central controller (24) sending an enabling signal to one or more of the nodes (12). Furthermore, the recursive methodology using modulo arithmetic discussed above is performed by the processor (26) using programming instructions (27) stored in the central processor's memory (28).

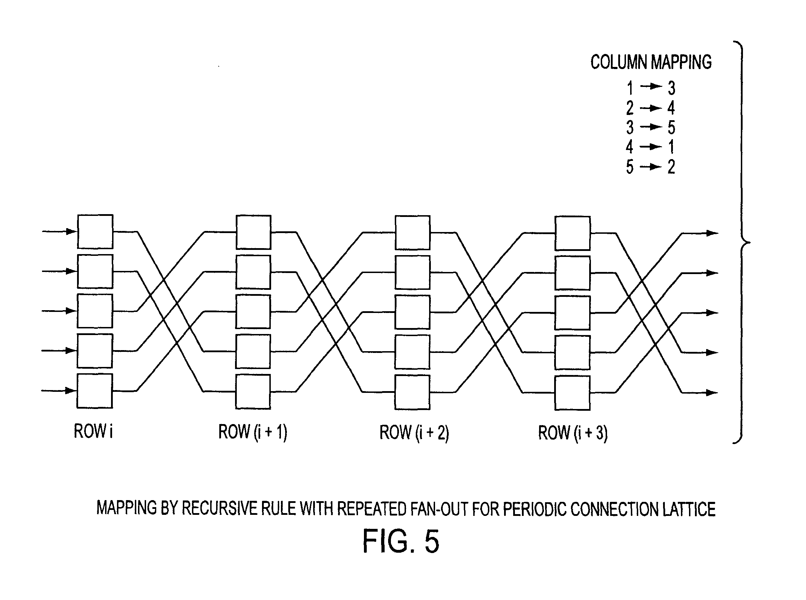

This same methodology is then applied when establishing connection states between row (i + 1) and row (i + 2), between row (i + 2) and row (i + 3) and so on until a connection topology is created (or enabled) between the ingress and the egress of the switching fabric (10). See Figure 5.

Figure 6 shows the "wrap around characteristic of using modulo arithmetic to map the nodes. i maps to i + 1 (i.e., the next row and j maps by adding 2 and evaluating modulo 5.) The resultant mapping "wraps around at row 6 so that every $6^{th}$ row repeats the initial input sequence.

This simple heuristic example is constructed to demonstrate a blocking-compensated orthogonal-mixing interconnection mapping. It achieves this result without using the cyclic permutation used in the Huang patent.

The recursive rule channel assignment is performed to configure a datalink layer using existing physical connections. Once the datalink layer assignments have been made, the central controller (24) for the collection of nodes (12) has a set of links or logical connections (30) from which it determines a consistent set of paths as it compiles a routing table. Each router (12) maintains and updates a routing table. It uses the routing table to determine which node (12) to forward information it receives. This routing table comprises the mapping from the ingress edge (or input edge) to the egress edge (or output edge) of the network (10). In the case where there is a partitioned fabric (i.e., a fabric segregated into disjoint sets of nodes), different recursive mappings can be defined on the separate partition elements. Each mapping has the same effect - uniform distribution of traffic across that partitioned section.

Uniform Distribution of Traffic Across that Partitioned Section by Use of a Modulo Calculation on both the Row and the Column Indices

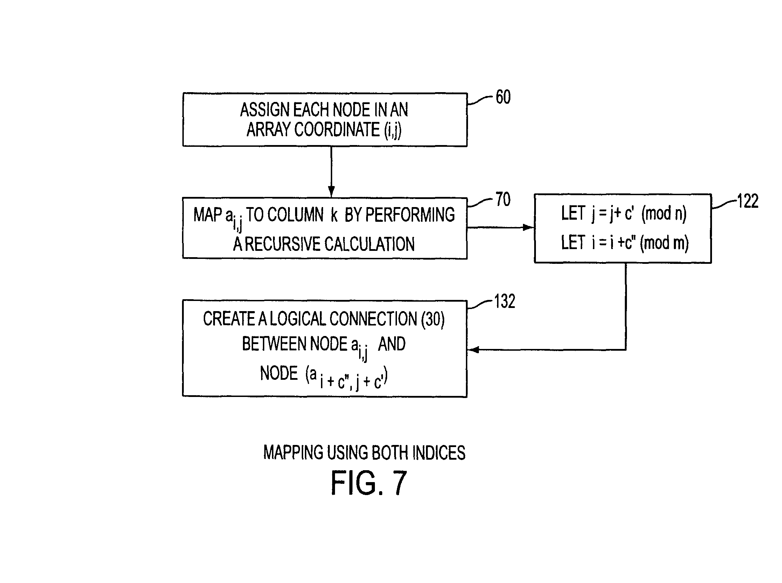

To extend the generality of this example, we again consider the m×n array defined above. In the previous example, the mapping was from row to row, as the column assignment in the mapping was performed using a modulo calculation. More generally, the mapping may be determined by modulo arithmetic on both indices, i.e., both the row and the column indices (see Fig. 7). First, each node (12) in the fabric is assigned an array coordinate, (i,j) (60). Next, the row index i maps to i' (70) by adding a constant c' to i and evaluating the sum mod m (modulo the number of rows) (122). The column index j maps to j' by adding a constant c'' to j and evaluating the sum mod n (modulo the number of columns) (122). Next, a connection state is created between node $a_{i,j}$ and node ($a_{i+c', j+c}$) (132) by enabling that physical (or operable) connection. This ensures a systematic and uniform disbursal of inputs across the fabric. In a preferred embodiment, the connection state is created by the processor (26) in the central processor (24) sending an enabling signal to one or more of the nodes (12). Furthermore, the recursive methodology using modulo arithmetic discussed above is performed by the processor (26) using programming instructions (27) stored in the central processor's memory (28).

The figure shown in figure 3 is equivalent to (i.e. isomorphic) a crossbar switch. The idea is to take a collection of nodes, index the nodes into an array, and then make channel assignments (datalink layer connections) by computations on the array indices.

To further extend this idea, a collection of nodes (12) may be conceptually arranged into a multi-dimensional array (10). In the array representation of the network (10), the order of the array is equal to the number of nodes within the network (10). The mapping from one array element to the next is done by a modulo calculation on each of the array indices.

In the second part, the method makes assignments from one row to the next, in an m×n array. As with the first example (mapping by recursive rule), this can be generalized. The network nodes are indexed and the mapping is based on a modulo calculation on the node indices (with the constraint checks).

In both parts, the network under consideration has m·n nodes. The network was represented by a rectangular m×n array. The mapping of array elements was determined by operations on the row and column indices using modulo arithmetic.

This can be discussed in the context of group theory.

Notation

$\mathbf{Z}$ is the set of integers.

$\mathbf{Z}_m$ is the set of integers mod m = {**0, 1, 2, ..., m-1**}.

For example, let m=5. Then this set is $\mathbf{Z}_5$ = {**0, 1, 2, ..., 4**}

Take the residue class **3**. The integers in this class all have a remainder of 3 upon division by 5. 8, 28, -22, 43 are all in **3**. All multiples of 5 belong to the residue class **0**. The use of $\mathbf{Z}_m$ is natural if one is indexing a set with a finite number of elements, as this manner of indexing wraps around to 0 once the index exceeds m-1.

If the modulo number m is not a prime number, it can be written as a product of numbers other than itself and 1. In the above examples, a network with m·n nodes was considered. The network is indexed by a set of integers {1,..., m·n} so that each node is counted. The network is represented then by $\mathbf{Z}_{mn}$, so that the index for the set wraps around. As seen in a theorem in Bhatt (P.B. Bhattacharya, S.K. Jain and S.R. Nagpaul, Basic Abstract Alegebra (IEEE Press ISBN 0 521 31107 1), Chapter 8. This set has an equivalent representation:

$\mathbf{Z}_{mn} \equiv \mathbf{Z}_m \oplus \mathbf{Z}_n$ . Where '≡' means logical equivalence as an isomorphism. The row index i runs from 0 to m-1 while the column index runs from 0 to n-1. This is for a two-dimensional (rectangular) representation.

For a network with N nodes, suppose N is a product of q numbers: N= $n_1 \cdot n_2 ... n_q$.

Then $\mathbf{Z}_N \equiv \mathbf{Z}_{n1} \oplus \mathbf{Z}_{n2} \oplus .. \oplus \mathbf{Z}_{nq}$. Elements in the network can be indexed in the recursive assignment algorithm. The number of loops indicate the dimensionality of the array representation (e.g. the two loops indicate a 2D rectangular representation). The number of loops in the assignment algorithm corresponds to a $\mathbf{Z}_{n1}$ element in the direct sum. As given in the theorem, each of these is equivalent. The idea is to create an indexing scheme for the network that is easy to implement in a nested loop structure so that a mapping between array elements can be constructed in a recursive manner.

In the preceding discussion, an abstract collection of switching nodes was considered, without considering capacity constraints. The next section considers capacity constraints.

Mapping by Recursive Assignment Taking into Account Capacity Constraints

This section details the use of a recursive method to solve the interconnection problem through the fabric by taking into account capacity constraints. In the prior art, this problem can be formally restated as a "*vertex-arc formulation of a multicommodity flow*" as in disclosed in the book Graphs and Algorithms by M. Gondran and M. Minoux (John Wiley & Sons, 1984), pp. 243-63, 629. The solution of this problem in Gondran maximizes a set of multicommodity flows on a graph. The solution is subject to the constraint that a flow cannot exceed the capacity on its arc (i.e. connection).

A graph is a set of vertices along with a set of arcs that connect some of the vertices. Applied to the switch fabric problem, the vertices are the switching nodes and the arcs are channels (or links) connecting the switching nodes. The multicommodity flow problem is given in Gondran, page 243. These are given in equations 1 through 3 below.

$$(1) \quad A \cdot \varphi^k = d_k b_k$$

for $1 \le k \le K$.

$$(2)\ \Sigma_k \varphi_u^k \leq c_u$$

for $\forall u \in U$, where the capacity constraint $c_u$ is the condition requiring the total flow on a link u to not exceed the available capacity.

$$(3)\ \varphi_u^k \geq 0$$

for $\forall u$, $\forall k$.

A is the *vertex-arc incidence matrix,* which indicates how the vertices are connected and the direction of the flow. $\varphi^k$ is the kth traffic flow. $b_k$ is an n-vector and $d_k$ is its associated capacity.

K represents the total number of the flows that are incident upon the switch fabric. K is independent of the dimensions and capacities of the fabric. The total flow may at one moment under utilize fabric resources and at another moment exceed fabric capacity. This is the reason why wide sense nonblocking is important - so that the network can accommodate as large traffic loads as possible and to provide multiple paths through the fabric for load balancing.

This problem can be solved by a recursive method. (Gondran, page 630). The selection of a path is generally based on a performance criteria which minimizes the consumption of network resources. Here, the solution seeks the shortest path $\pi_i$: from vertex $v_i$ to vertex $v_j$.

$$(4)\ \pi_i = \min(\pi_i + 1_{ji})$$

over all $v_j$ (vertices in the graph) , where $\pi_i$ is the shortest path; and '$1_{ji}$'are the distances from vertex $v_i$ to the different vertices $v_j$.

This method compares the distances $1_{ji}$ among the next hop choices $v_j$ then takes the vertex that is the minimum distance to make the next arc in the path.

The recursive step is:

$$(5)\ \pi_i^{k+1} = \min \{\pi_i^k, \min(\pi_i^k + 1_{ji})\}$$

The Mayes/Cantrell connection assignment algorithm for the interconnection resembles the algorithm outlined in Gondran appendix 4, but has differences. The Gondran algorithm is for a *shortest path between vertices* (nodes) to construct a minimum-length path; the paths then form a route. This is a <u>*routing*</u> algorithm.

MAPPING BY RECURSIVE ASSIGNMENT TAKING INTO ACCOUNT CAPACITY CONSTRAINT AND NONBLOCKING ASSIGNMENT

In a preferred embodiment, the present invention creates *interconnections* (i.e., an interconnection topology) through a switch fabric. Path length is not considered, while capacity and nonblocking assignment (free of contention) across the switch are. The connection assignment method is used to provide a compatible set of links or arcs (logical connections (30)) in the network array (10). Contention occurs when different paths use a common link resulting in collision.

The novel aspect of the present invention is the imposition of two constraints (capacity and nonblocking assignment) before each recurrence of equation 5 above. The capacity constraint $c_u$ (equation 2) is the condition requiring the total flow on a link u to not exceed the available capacity. The second constraint is that the solutions for the interconnection maintain the wide sense nonblocking state of the fabric (i.e., free of contention). The constraint conditions are subject to change as the network's environment changes. Connection options that do not meet constraints are discarded before equation 5 is evaluated. Therefore, solving equation 5 may yield a number of solutions, all of which are valid because each solution has been checked for contention and capacity prior to solving equation 5.

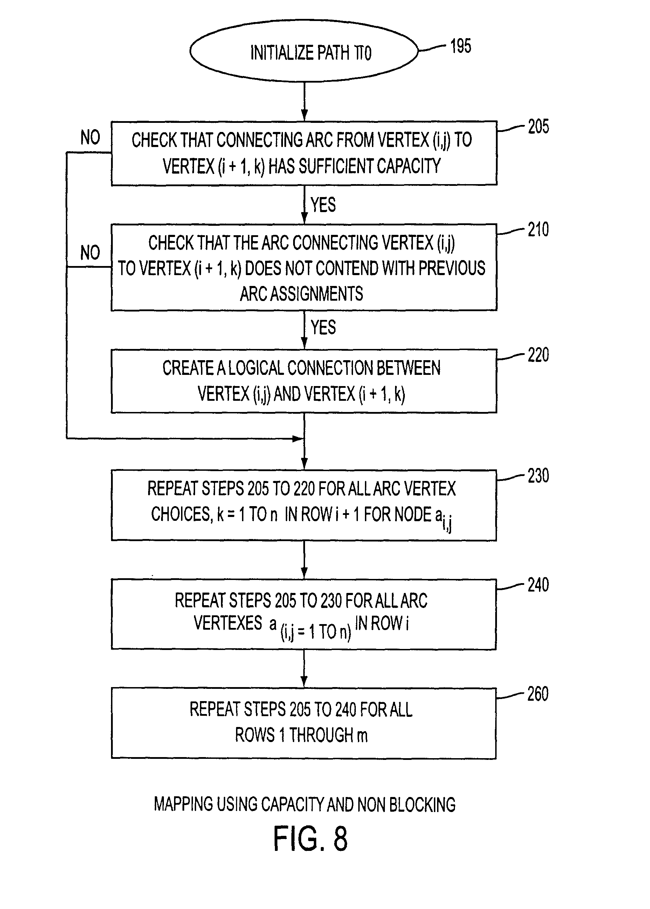

The switch fabric (10) can be arranged as an m×n array or as a more general addressing scheme. To illustrate the recursive algorithm without loss of generality, the fabric (10) is again arranged in a rectangular array and the mapping constructed to map from row to row. The first path is initialized $\pi_0$ (195), mapping the first switching node, A, to a switching node, B, in the next layer. See Fig. 8. In addition, a capacity check (205) and a contention check (210) are performed.

To map the second vertex, B, the algorithm looks at the available vertices in the next row and checks for both 1) sufficient capacity and 2) arc compatibility with the current set of arcs. If these two criteria are satisfied, then the

path $\pi_1$ is assigned. That is, a connection assignment is created between switching node A and switching node B, or in more general terms, vertex (i,j) and vertex (i+1, k) (220). This procedure is followed until all channel assignments have been made. That is, steps 205 thru 220 are repeated for all vertexes, k=1 to n, in row i+1 (230). Furthermore, steps 205 thru 230 are repeated for all nodes a $_{(i,j = 1 \text{ to } n)}$ in row i (240). Finally, steps 205 thru 240 are repeated for all rows 1 through m (260). See Fig. 8.

Once completed, the result is a compatible set of interconnections in the switch fabric (10) with sufficient capacity (e.g., bandwidth) to accommodate flows used in the capacity checks in the initial assignment. At least one logical path is created (or enabled) from ingress to egress of the switching fabric (10).

In summary, the Gondran algorithm is improved - first a vertex candidate is evaluated to verify that the connecting arc has sufficient capacity. Second, compatibility criteria is checked. That is, check that the arc connecting vertex (i,j) to vertex (i+1,k) does not contend with previous arc assignments. (Put another way, testing that the arc does not contend with previous logical connections or arc assignments or connection assignments). Only after these two criteria are met is a link or logical connection (30) assigned. In a preferred embodiment, the connection assignment is created by the processor (26) in the central processor (24) sending an enabling signal to one or more of the nodes (12). Furthermore, the evaluation and checking of the capacity and the contention criteria discussed above is performed by the processor (26) using programming instructions (27) stored in the central processor's memory (28).

It is important to note, once again that this disclosure outlines mapping methods to assign connections at the datalink layer (i.e., configure a connection topology) when a number of connection options (i.e., physical topology with a high degree of node connectivity) exists. This is not a routing algorithm. Once the connection state topology is determined (our method), the routing algorithm uses this configuration to determine a path (route) through the fabric (10).

The following represents the recursive methodology used in the present invention for connecting vertex (12) or node (i,j) from row(i) to row(i+1) in an m×n array or m×n network (10):

| 100 | For i = 1 to m | *(for rows 1 through m )* |
|---|---|---|
| 200 | For j=1 to n | *(for the n vertices in current row)* |
| 300 | For k=1 to n | *(for the n vertices in the next row)* |

(1) Look at vertex(i+1,k). Check that the connecting arc from vertex(i,j) has sufficient capacity. If so, then keep as a choice. If not, then discard and go to 300.

(2) Check that the arc connecting vertex(i,j) to vertex(i+1,k) does not contend with previous arc assignments mapping current row to next row. If there is no contention, then keep as a choice (i.e., create a logical connection between the two vertexes). If there is contention, discard and go to 300.

     End
   End.

Repeat assignments for current row until arc-vertex choices (or arc choices or link choices or logical connection choices) to the next row are depleted. When choices are depleted, go to 100 (mapping for next row). *(Repeating loops 200 and 300 establishes multipaths from current row to next row)*

   End. *(Complete for m rows)*

The repeated assignments check (see above) reflects the degree of connectivity. For a node with a degree of connectivity k, an initial assignment is made, then (k-1) repeated assignments are made, until the node (12) has k connections (30).

The inner loops (200 and 300) are repeated for the current row until there are no remaining connection options in the next row. This establishes multiple connections (or connection states) (30) from current row to the next. The central scheduler (24) may use these as options in multipath routing. Multiple paths provide redundancy and fault tolerance. Multiple paths through a fabric (10) also provide reduced packet delay and reduced packet jitter. This method is recursive because the previous interconnection solution (for the previous rows) is carried forward as the method computes the interconnection assignments for the next row.

Note that the constraints are applied first, rather than following the arc assignment. The vertex choices are first checked as valid solutions, then the arc (or link) assignment is made. Note also that no two arc assignments are the same for vertices in the same row (this would create contention). Hence, the method provides diffusivity - uniformly distributing interconnection assignments from row to row. This is orthogonal mixing.

As traffic patterns change, the central scheduler (24) can modify capacity requirements from a certain input port to a given output port to reflect changes in the traffic load. The recursive algorithm is then performed again. Internal load balancing is administered by the central controller (24) as it modifies connection state topology, spreading traffic across the multiple paths within the switching fabric (10). When a switching node (12) is added or removed from the network (10), the method is performed again to determine a full-capacity nonblocking configuration. As a result, the fabric configuration is scalable.

The solutions (connection topologies) do not yield the optimum shortest path through the network (10) as is intended by Gondran in the prior art, but a set of paths (interconnects (30) through the fabric (10)) with sufficient capacity to accommodate traffic flows and with wide sense nonblocking characteristics.

While the invention has been disclosed in this patent application by reference to the details of preferred embodiments of the invention, it is to be understood that the disclosure is intended in an illustrative rather than in a limiting sense, as it is contemplated that modification will readily occur to those skilled in the art, within the spirit of the invention and the scope of the appended claims and their equivalents.

**Claims**

1. A method of interconnecting a plurality of nodes in a network having an ingress and an egress, comprising the steps of:

   operably interconnecting said plurality of nodes; and
   creating a logical channel between said ingress and said egress by enabling at least one of said operable interconnections between adjacent rows of nodes.

2. The method according to claim 1, wherein said step of assigning further comprises assigning more than one of said interconnections between said adjacent rows, whereby multiple logical paths are enabled through said switching network.

3. The method according to claim 1, further comprising the steps of varying the number of switching nodes in said network.

4. The method according to claim 1, wherein said step of creating a logical channel between said ingress and said egress by enabling at least one of said operable interconnections between adjacent rows of nodes further comprises the steps of:

   assigning a coordinate to each of said nodes in said network;
   mapping at least one of said operable interconnections between adjacent rows of nodes recursively, whereby a logical connection is created between said adjacent row of nodes.

5. The method according to claim 4, wherein said step of mapping further comprises computing the coordinates of said second node by performing a recursive calculation to the coordinates of said first node.

6. The method of interconnecting nodes in a network according to claim 4, wherein said step of creating a logical connection further comprises:

   checking capacity on said at least one of said operable interconnections between adjacent rows of nodes;
   determining if said operable interconnection is compatible with existing operable interconnections; and
   creating said logical connection if flow doesnot exceed said capacity.

7. The method according to claim 5, wherein said step of performing a recursive calculation comprises computing the coordinates of said second node by performing modulo arithmetic to the coordinates of said first node.

8. The method according to claim 7, wherein said step of performing modulo arithmetic comprises computing the coordinates of said second node by adding a constant to the coordinates of said first node and evaluating the sum modulo.

9. The method according to claim 7, wherein said step of performing modulo arithmetic comprises computing the coordinates of said second node by adding a constant to the coordinates of said first node and evaluating the sum modulo the number of rows.

10. The method according to claim 9, wherein said step of performing modulo arithmetic further comprises:

computing the coordinates of said second node by adding a constant to the column coordinate of said first node and evaluating the sum modulo the number of columns.

11. The method of interconnecting nodes in a network according to claim 6, further comprising repeating the steps of performing, until all channel assignments have been made.

12. The method according to claim 6, wherein said step of determining if said operable interconnection is compatible further comprises testing if the logical connection connecting two of said nodes contends with a previous logical connection.

13. A method of interconnecting nodes in an array, comprising the steps of:

checking capacity on at least one arc connecting at least one node in a first row to at least one other node located on different row of said array;
determining if said at least one arc is compatible; and
creating a logical connection if flow doesnot exceed said capacity and said arc is compatible.

14. The method according to claim 13, wherein said step of determining if said arc is compatible further comprises determining if the logical connection connecting two of said nodes contends with previous connection assignments.

15. The method according to claim 13, further comprising the steps of adding switching nodes to said network.

16. The method according to claim 13, further comprising the steps of subtracting switching nodes from said network.

17. The method of interconnecting nodes in a network according to claim 13, further comprising repeating the steps of performing, determining and creating until all arc choices are depleted for said at least one node.

18. The method of interconnecting nodes in a network according to claim 17, further comprising repeating the steps in claim 17 until all arc choices are depleted for at least one other node in said first row of said array.

19. The method of interconnecting nodes in a network according to claim 18, further comprising repeating the steps in claim 18 until all arc choices are depleted for at least one node in at least one other row of said array.

20. The method according to claim 19, further comprising the step of varying the number of switching nodes in said network; and
wherein said step of determining if said arc is compatible further comprises determining if the logical connection connecting two of said nodes contends with a previous logical connection.

21. A network, comprising:

a central controller comprising;
a processor; and
memory; and
a plurality of switching nodes operably connected to said central controller.

22. The network according to claim 21, wherein said memory comprises programming instructions to create at least one logical interconnection between said plurality of switching nodes.

23. The network according to claim 22, wherein said programming instructions further comprise instructions to assign a coordinate to each of said nodes in said network and map said at least one of logical interconnections recursively.

24. The network according to claim 22, wherein said programming instructions further comprises instructions to check capacity on at least one operable interconnection between adjacent rows of nodes, determine if said operable interconnection is compatible and create said logical connection if flow doesnot exceed said capacity and said interconnection is compatible.

25. The network according to claim 23, wherein said programming instructions further comprise instructions to compute the coordinates of a second node by performing a recursive calculation to the coordinates of a first node.

**26.** The network according to claim 24, wherein said programming instructions further comprises instructions to repeat the steps of checking, determining and creating until all channel assignments have been made.

**27.** The network according to claim 25, wherein said programming instructions further comprise instructions to compute the coordinates of said second node by performing modulo arithmetic to the coordinates of said first node.

**28.** The network according to claim 27, wherein said programming instructions further comprises instructions to compute the coordinates of said second node by adding a constant to the coordinates of said first node and evaluating the sum modulo.

**29.** The network according to claim 28, wherein said programming instructions further comprises instructions to compute the coordinates of said second node by adding a constant to the coordinates of said first node and evaluating the sum modulo the number of rows.

**30.** The network according to claim 29, wherein said programming instructions further comprises instructions to compute the coordinates of said second node by adding a constant to the coordinates of said first node and evaluating the sum modulo the number of columns.

**31.** A switching array comprising switching nodes arranged into rows and columns, comprising:

    a central controller, comprising:

        a processor; and
        memory; and
        a plurality of switching nodes operably connected to said central controller.

**32.** The switching array according to claim 31, wherein said memory comprises programming instructions to create logical interconnections between said plurality of switching nodes.

**33.** The switching array according to claim 32, wherein said programming instructions further comprise instructions to check capacity on at least one arc connecting at least one node in a first row to at least one node located on different row of said array, determine if said at least one arc is compatible; and create a logical connection between said plurality of nodes if flow is less than said capacity and said arc is compatible.

**34.** The switching array according to claim 33, wherein said programming instructions further comprise instructions to repeat the steps of checking, determining and creating until all arc choices are depleted for said at least one node.

**35.** The switching array according to claim 33, wherein said switching fabric is a terabit optical router.

**36.** The switching array according to claim 33, wherein said programming instructions to determine if said at least one arc is compatible further comprise instructions to determine if the logical connection connecting two of said nodes contends with a previous logical connection.

**37.** The switching array according to claim 34, wherein said programming instructions further comprise instructions to repeat the steps in claim 34 until all arc choices are depleted for at least one other node in said first row of said array.

**38.** The switching array according to claim 37, wherein said programming instructions further comprise instructions to repeat the steps in claim 35 until all arc choices are depleted for at least one other row of said array.

**39.** The switching array according to claim 38, wherein said array is a rectangular array, wherein said programming instructions further comprise instructions to vary the number of switching nodes in said network and wherein said programming instructions to determine if said arc is compatible further comprises instructions to determine if the logical connection connecting two of said nodes contends with a previous logical connection.

SWITCHING NETWORK WITH ROWS AND COLUMNS

FIG. 1

SWITCHING NETWORK REPRESENTED AS A TWO-DIMENISIONAL ARRAY

FIG. 2

MAPPING BY RECURSIVE RULE

IN WHICH CONNECTION ASSIGNMENT IS BY
MODULO CALCULATION

FOR NODES $a_{i,j}$
ROW COORDINATE $i$ MAPS TO $i + 1$
(I.E. THE NEXT ROW)
COLUMN COORDINATE
$j'$ IS CALCULATED:
$j' = (j + 2)\bmod 5$
$j$ MAPS TO $j'$

$1 \longrightarrow 3$
$2 \longrightarrow 4$
$3 \longrightarrow 5$
$4 \longrightarrow 1$
$5 \longrightarrow 2$

FIG. 3

EP 1 217 796 A2

ASSIGN EACH NODE IN AN
ARRAY COORDINATE (i,j) —60

MAP $a_{i,j}$ TO COLUMN k BY PERFORMING
A RECURSIVE CALCULATION —70

LET j = j + c (mod n) —80

CREATE A LOGICAL CONNECTION
BETWEEN NODE $a_{i,j}$ AND
NODE $(a_{i,j+c})$ —90

MAPPING THE CONTENTS OF NODE $a_{i,j}$

# FIG. 4

COLUMN MAPPING

1 → 3
2 → 4
3 → 5
4 → 1
5 → 2

ROW i      ROW (i + 1)      ROW (i + 2)      ROW (i + 3)

MAPPING BY RECURSIVE RULE WITH REPEATED FAN-OUT FOR PERIODIC CONNECTION LATTICE

## FIG. 5

FIGURE 6 ILLUSTRATION OF "WRAP AROUND" PERIODICITY OF SWITCH FABRIC LATTICE WITH REPEATED COLUMN MAPPING.
USING THE MAPPING IN FIGURE 1: i MAPS TO i+1 (i.e., TO THE NEXT ROW), j MAPS BY ADDING 2 AND EVALUATING MOD 5.

TABLE 1

| j = \ i = | 1 | 2 | 3 | 4 | 5 |
|---|---|---|---|---|---|
| 1 | a11 | a12 | a13 | a14 | a15 |
| 2 | = a11 | = a15 | = a11 | = a12 | = a13 |

NOTATION: aij
aij IS THE ELEMENT IN THE MATRIX
IN ROW i COLUMN j

THE CONTENTS IN THE SECOND ROW ARE ASSIGNED BY THE MAPPING IN FIGURE 1.
THE ROW COORDINATE INCREMENTS BY 1, AS THE CONNECTION IS MADE WITH THE NEXT ROW.
THE COLUMN COORDINATE INCREMENTS IN THIS EXAMPLE BY 2 (MOD 5).
IN THE TABLE ABOVE, THE ENTIRES IN THE SECOND ROW SHOW THE ORIGIN OF EACH ENTRY.
TABLE 1 IS AN IDENTICAL ASSIGNMENT TO THE FAN OUT MAPPING IN FIGURE 1.

# FIG. 6A

EP 1 217 796 A2

REPEATED MAPPING:

| | | | | |
|---|---|---|---|---|
| ROW 1 | A | B | C | D | E |
| ROW 2 | D | E | A | B | C |
| ROW 3 | B | C | D | E | A |
| ROW 4 | E | A | B | C | D |
| ROW 5 | C | D | E | A | B |
| ROW 6 | A | B | C | D | E |
| ROW 7 | D | E | A | B | C |
| ROW 8 | B | C | D | E | A |
| ROW 9 | E | A | B | C | D |
| ROW 10 | C | D | E | A | B |
| ROW 11 | A | B | C | D | E |
| ROW 12 | D | E | A | B | C |

THE MAPPING YIELDS A "WRAP AROUND" AT ROW 6, SO THAT EVERY SIXTH ROW REPEATS THE INITIAL INPUT SEQUENCE.
THE WRAP AROUND SEQUENCE IS HIGHLIGHTED IN BLUE. THIS SIMPLE EXAMPLE GIVES THE SAME RESULT AS HUANG'S "CYCLIC GROUP INTERCONNECTION MAPPING", ILLUSTRATED HERE ON A GROUP OF FIVE ELEMENTS {A, B, C, D, E}.
SINCE THE START OF EACH BLUE BLOCK IS STAGGERED FROM THE OTHERS, THE MAPPING IS "ORTHOGONAL" AS IN HUANG'S LANGUAGE IN USP 5,841,775.

# FIG. 6B

EP 1 217 796 A2

```
┌─────────────────────────────┐ ⌐60
│   ASSIGN EACH NODE IN AN     │
│    ARRAY COORDINATE (i,j)    │
└─────────────────────────────┘
              │
              ▼
┌─────────────────────────────┐ ⌐70        ┌─────────────────────────────┐ ⌐122
│ MAP a i,j TO COLUMN  k  BY   │───────────▶│   LET  j = j + c'  (mod n)   │
│ PERFORMING A RECURSIVE       │            │   LET  i = i + c" (mod m)    │
│ CALCULATION                  │            └─────────────────────────────┘
└─────────────────────────────┘                          │
                                                          │
┌─────────────────────────────┐ ⌐132                     │
│ CREATE A LOGICAL CONNECTION  │◀────────────────────────┘
│ (30) BETWEEN NODE a i,j  AND │
│ NODE (a i+c", j+c')          │
└─────────────────────────────┘
```

MAPPING USING BOTH INDICES

# FIG. 7

INITIALIZE PATH π0 — 195

NO
CHECK THAT CONNECTING ARC FROM VERTEX (i,j) TO VERTEX (i + 1, k) HAS SUFFICIENT CAPACITY — 205

YES

NO
CHECK THAT THE ARC CONNECTING VERTEX (i,j) TO VERTEX (i + 1, k) DOES NOT CONTEND WITH PREVIOUS ARC ASSIGNMENTS — 210

YES

CREATE A LOGICAL CONNECTION BETWEEN VERTEX (i,j) AND VERTEX (i + 1, k) — 220

REPEAT STEPS 205 TO 220 FOR ALL ARC VERTEX CHOICES, k = 1 TO n IN ROW i + 1 FOR NODE $a_{i,j}$ — 230

REPEAT STEPS 205 TO 230 FOR ALL ARC VERTEXES $a_{(i,j = 1 \text{ TO } n)}$ IN ROW i — 240

REPEAT STEPS 205 TO 240 FOR ALL ROWS 1 THROUGH m — 260

MAPPING USING CAPACITY AND NON BLOCKING

# FIG. 8